# EUROPEAN PATENT SPECIFICATION

(11) **EP 3 010 254 B1**
(45) Date of publication and mention of the grant of the patent: **01.03.2017**
(21) Application number: 14189207.5
(22) Date of filing: 16.10.2014
(51) Int. Cl.: H04S 7/00, H04R 5/04

(54) **Signal processing apparatus and signal processing method for a sound system**
Signalverarbeitungsvorrichtung und Signalverarbeitungsverfahren für ein Tonsystem
Appareil de traitement de signal et procédé de traitement de signal sonore

(43) Date of publication of application: 20.04.2016
(73) Proprietor: Alpine Electronics, Inc., Tokyo (JP)
(72) Inventor: Esser, Timo, 70567 Stuttgart (DE)
(74) Representative: Klunker . Schmitt-Nilson . Hirsch

(56) References cited:
- JP-A- 2001 036 999
- US-A1- 2002 131 611
- US-A1- 2008 005 418
- US-A1- 2009 292 377
- US-A1- 2010 049 528

## Description

The invention relates to a signal processing apparatus comprising a signal input section through which in operation an audio signal is provided and a sound mode setting section for setting a preset sound mode from a plurality of preset sound modes retained in the signal processing apparatus, which is capable of giving audible feedback upon a change in setting of a preset sound mode. The invention further relates to a signal processing method for a sound system.

Sound systems are known in the art which provide a plurality of preset sound modes retained in an audio signal processing apparatus, such as stereo sound mode, 3D sound mode, or surround sound mode, from which the user may select and switch between them. Particularly, vehicle sound systems often have more than one preset sound mode, for example stereo, surround and 3D sound mode, or with and without an additional sound effect, VIP or seat optimizations.

When switching between preset sound modes, it is desirable to have audible feedback to the user that the user's triggering action (e.g. pressing a button) has an effect on the sound. Otherwise the user might think that the system shows no reaction, i.e. is defect, since the user may have the impression that nothing happens when he presses a sound set button. This may lead to complaints to the manufacturer, who will have to resolve this, which in the end may increase overall manufacturing costs of the product.

A known technical solution is to have different gain levels for different preset sound modes, so that in addition to the sound effect change the volume level of the audio output signals also changes.

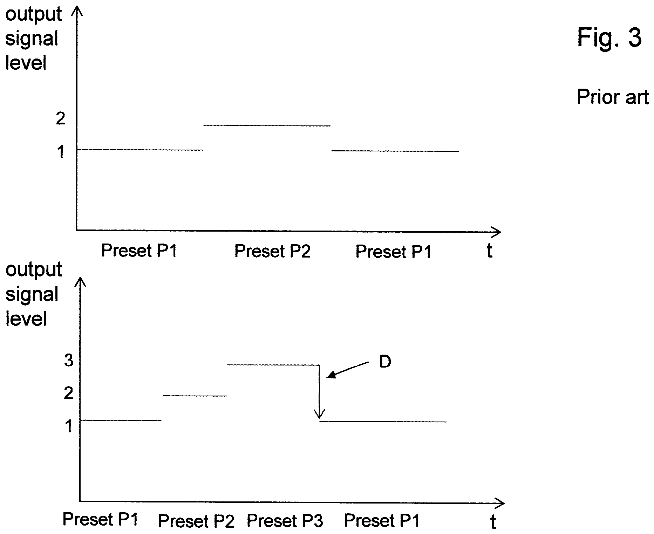

Fig. 3 shows a diagram of an output signal volume level provided to a loudspeaker in different preset sound modes over time t according to this known solution.

When a change in setting from one preset sound mode (such as Preset P1) to another preset sound mode (such as Preset P2) is performed, for example upon pressing a button by the user, the volume level of the output signals provided to the loudspeakers is increased. For example, when switching from Preset P1 to Preset P2, and then from Preset P2 to Preset P3, at least about 2-3 dB difference is respectively required to make each change in setting (i.e. switching) audible to the user. This leads to a great difference in volume level (denoted as "D" in Fig. 3) between the volume level in Preset P1 and the volume level in Preset P3. Thus, when switching from P1 to P3 the difference ("volume jump") will be very large and may lead to complaints by the user. A larger number of preset sound modes retained in the sound system makes this worse. Thus, in summary, such solution is not practical with more than two preset sound modes.

An audible feedback is generally required, otherwise users may be irritated that they feel nothing happens when they switch from one preset sound mode to another. An overall gain structure of a sound system, however, is only perfectly adjusted for one preset sound mode (like surround mode), the other preset sound modes (such as 3D or stereo mode) might suffer from lower S/N ratio, noise etc. This is especially the case if there are retained several preset sound modes (such as more than three). Thus, a gain or volume increase upon switching between preset sound modes in a way as set out above may decrease the audio experience in at least some of the preset sound modes.

EP 1 241 922 A2 discloses an audio system which has multiple amplifiers for driving audio speakers according to a selected one of at least two modes of operation in which a selection of the audio speakers and/or a required power output of the audio speakers differ between the modes. The system is operable, for example, to an entertainment system that has internal and external speakers and associated amplifiers for switching between stereo and surround sound modes. At least two distinct power supply voltage sources are provided for the amplifiers, and a switching element operates upon switching between the modes to couple one or another of the distinct power supply voltage sources to the power supply inputs of respective ones of the at least two amplifiers. This prevents the total audio output of the system from increasing, for example, when switching from two stereo outputs to five surround sound outputs.

JP 2008-067279 A discloses an audio output device which comprises gain control units to control and output gains for each audio signal generated in accordance with each of a plurality of sound field modes. When shifting a sound field mode among the plurality of sound field modes to switch to another sound field mode, gains to be set to the gain control units during a shifting term of switching are interpolated from gain setting values before and after switching and set to the gain control units, and the sound field mode is smoothly switched.

US 2002/131611 A discloses an audio system which has multiple amplifiers for driving audio speakers according to a selected one of at least two modes of operation in which a selection of the audio speakers and/or a required power output of the audio speakers differ between the modes. At least two distinct power supply voltage sources are provided for the amplifiers, and a switching element operates upon switching between the modes to couple one or another of the distinct power supply voltage sources to the power supply inputs of respective ones of the at least two amplifiers.

US 2008/005418 A1 discloses an interactive interface for electronic devices which includes a programmable processor connectable in communication with an electronic device for at least partially controlling operation of the electronic device and for monitoring operation of the electronic device, a memory connected to the processor for storing a program for operating the programmable processor, a user input device for accepting user input, the user input device connected to said programmable processor, and a display connected to the programmable processor. The interactive interface may be tethered to the electronic device by an electrical connector or by wireless communication.

US 2010/049528 A1 discloses a method for providing an audible prompt to a user within a vehicle. The method includes retrieving one or more data files from a memory device. The data files define certain characteristics of an audio prompt. The method also includes creating the audio prompt from the data files and outputting the audio prompt as an audio signal.

It is an object of the invention to provide a signal processing apparatus and a signal processing method for a sound system which are capable of giving audible feedback upon a change in setting of a preset sound mode while not negatively impairing the audio experience.

The invention relates to a signal processing apparatus according to claim 1 and a signal processing method according to claim 15.

According to an aspect, there is disclosed a signal processing apparatus, comprising a signal input section through which in operation at least one audio signal is provided, a sound mode setting section for setting a preset sound mode from a plurality of preset sound modes retained in the signal processing apparatus, a signal output section which is configured to output at least one output signal to at least one loudspeaker in accordance with the preset sound mode set by the sound mode setting section, and a sound volume setting section which is coupled with the sound mode setting section and configured to control a volume of the at least one output signal. The sound volume setting section is configured to control the volume of the at least one output signal to perform a first volume level change of the at least one output signal from a first level to a second level and a second volume level change of the at least one output signal from the second level back to the first level, wherein the first volume level change is steeper than the second volume level change, when the sound mode setting section performs a change in setting from one of the plurality of preset sound modes to another one of the plurality of preset sound modes.

According to another aspect, there is disclosed a signal processing method for a sound system, the method comprising the steps of:
- setting a preset sound mode from a plurality of preset sound modes retained in the sound system,
- outputting at least one output signal to at least one loudspeaker in accordance with the currently set preset sound mode, and
- controlling a volume of the at least one output signal to perform a first volume level change of the at least one output signal from a first level to a second level and a second volume level change of the at least one output signal from the second level back to the first level, wherein the first volume level change is steeper than the second volume level change, upon a change in setting from the currently set preset sound mode to another one of the plurality of preset sound modes.

Advantageously, when switching a preset sound mode from one preset sound mode to another preset sound mode, the user is provided with audible feedback that the triggering action (e.g., pressing a button) of switching the sound mode has an effect on the sound, i.e. that sound mode switching is actually performed. On the other hand, the absolute volume level is not increased at the end of the second volume level change, since the volume level is returning back to the original volume level as before the sound mode switching. With a steep first volume level change, audible feedback is clearly recognizable by the user, while the less steep second volume level change provides the advantage that the user may not recognize a remarkable volume change. At the same time, the invention advantageously does not increase the absolute volume level or gain level after the sound mode change has been performed (i.e., at the end of the second volume level change). Thus, the audio experience in each preset sound mode is not negatively impaired by the audible feedback. Further, the invention is advantageously applicable in a case in which more than two preset sound modes are retained in the sound system.

According to an embodiment, the second level of the at least one output signal is set in a range of 1 to 3 dB higher or lower than the first level.

According to a further embodiment, the first volume level change is set in a range of 10 to 100 times steeper than the second volume level change.

As to the duration, the first volume level change may be set to have a duration in a range of lower than 200ms, particularly lower than 100ms. The second volume level change may be set to have a duration in a range of 2 to 10s, particularly in a range of 3 to 5s.

All embodiments as described herein with respect to the apparatus may equally be applied in connection with the method as described herein.

Embodiments of the invention are described in greater detail below with reference to the Figures, in which:
- Fig. 1: shows a perspective schematic view of an exemplary vehicle having an exemplary vehicle sound system in accordance with an embodiment of the invention installed therein,
- Fig. 2: shows a block diagram of an exemplary signal processing apparatus in accordance with an embodiment of the invention,
- Fig. 3: shows a diagram of a volume level of an output signal provided to a loudspeaker in different preset sound modes according to the prior art,
- Fig. 4: shows a diagram of a volume level of an output signal provided to a loudspeaker in different preset sound modes according to an embodiment of the invention,
- Fig. 5: shows a diagram of a volume level of an output signal provided to a loudspeaker in different preset sound modes according to a further embodiment of the invention.

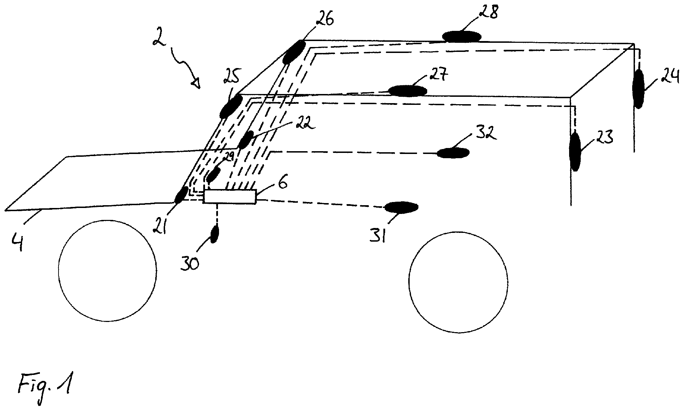

Fig. 1 shows a perspective schematic diagram of a vehicle 4 provided with a vehicle sound system 2 in accordance with an exemplary embodiment of the invention. The vehicle sound system 2 comprises a plurality of (in this example: twelve) loudspeakers 21-32. It should be noted that the invention can be applied with any number of loudspeakers, and also in other environments, such as home entertainment. In particular, the exemplary vehicle sound system 2 comprises a left front speaker 21, a left rear speaker 31, a left surround speaker 23, a right front speaker 22, a right rear speaker 32, a right surround speaker 24, a left front 3D speaker 25, a right front 3D speaker 26, a left rear 3D speaker 27, a right rear 3D speaker 28, a center front speaker 29, and a subwoofer 30. All of these speakers are coupled to a signal processing apparatus 6 by individual signal lines (shown in dashed lines in Fig. 1). It is also possible that the speakers 21-32 and the signal processing apparatus 6 are coupled via a bus architecture or any other means of signal communication, e.g. by wire and/or wirelessly.

The vehicle sound system 2 may comprise an audio signal receiving apparatus, such as a tuner, for receiving wireless audio source signals, such as radio broadcast waves or any other kind of signal / data transmission. Additionally or alternatively, it is possible that the vehicle sound system 2 is coupled to an audio source reading apparatus, such as a CD player or a DVD player or a hard disk drive or any other kind of signal / data storage device, e.g. via a data connection such as USB. The audio signal receiving apparatus and/or the audio source reading apparatus may be coupled to the signal processing apparatus 6 for providing the audio source signal(s) to the signal processing apparatus 6. No matter what the audio source is, the signal processing apparatus 6 is adapted to receive the audio source signal(s) and to generate respective output signals for the plurality of speakers.

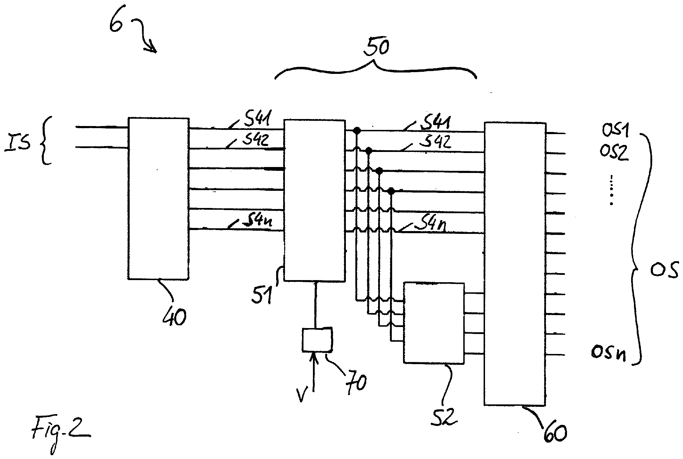

Fig. 2 shows a signal processing apparatus 6 in accordance with an exemplary embodiment of the invention. The signal processing apparatus 6 comprises a signal input section 40, a sound mode setting section 50, a sound volume setting section 70, and a signal output section 60. The sound mode setting section 50 may comprise, in this embodiment, an audio signal conditioning module 51 and a room simulation module 52, as described further herein below.

The exemplary signal processing apparatus 6 of the present embodiment is described with a stereo signal IS as input signal and being the audio source, which may comprise a left source signal and a right source signal, and with a multi-channel output signal OS comprising twelve output signals OS1-Osn for being output to the twelve speakers 21-32 of the vehicle 4 as described above.

The signal input section 40 performs an up-conversion of the two-channel stereo input signal IS. In particular, the signal input section 40 generates audio signals S41 to S4n, e.g. comprising a left front signal, a right front signal, a left surround signal, a right surround signal, a center front signal and a subwoofer signal. Such up-conversion of a two-channel stereo signal into a surround signal via the signal input section 40 is per se known in the art.

The up-converted audio signal is then input into the audio signal conditioning module 51. The audio signal conditioning module 51 is configured to adapt the volume, fading, balance and/or subwoofer levels of the audio signals. Such signal conditioning is also per se known in the art. Depending on the complexity of the vehicle sound system, the audio signal conditioning module 51 may have different functionality and different degrees of signal conditioning. It is also possible that the audio signal conditioning module 51 is dispensed with and that only a simple volume scaling takes place. The only essential aspect is that one or more audio signals (e.g. a multi-channel audio signal) are provided to respective loudspeakers depending on a preset sound mode from a plurality of preset sound modes retained in the signal processing apparatus 6, e.g. in the sound mode setting section 50.

For example, the plurality of preset sound modes retained in the signal processing apparatus 6 comprises at least one of a stereo sound mode, a surround sound mode, a 3D sound mode, and a loudspeaker optimization distribution mode among a plurality of loudspeakers coupled with the signal output section. Depending on the currently set preset sound mode, the audio signal conditioning module 51 may have a particular functionality and degree of signal conditioning, which is different for each of the retained preset sound modes. For example, a stereo sound mode requires different functionality and degree of signal conditioning than a surround sound mode, or a 3D sound mode, the latter involving e.g. dedicated 3D speakers, which may not be used in the stereo sound mode. For example, a dif ferent number of loudspeakers may be supplied with audio signals depending on the selected current preset sound mode than in another one of the preset sound modes, and/or differently conditioned audio signals achieving different sound effects may be supplied to the loudspeakers. Further, in a loudspeaker optimization distribution mode which is tailored, e.g., to the driver of the vehicle, the front speakers may be supplied differently (e.g. with more emphasis, such as higher volume level) than the rear speakers, i.e. the audio signal conditioning module 51 provides a particular functionality and degree of signal conditioning optimized for the front speakers among the plurality of speakers.

Moreover, according to an embodiment, the signal output section 60 in cooperation with the sound mode setting section 50 outputs a multi-channel output signal OS to the respective speakers, wherein a multi-channel output signal OS in one of the preset sound modes is different in channel configuration from a multi-channel output signal OS in another one of the preset sound modes. For example, in a stereo mode the signal output section 60 may provide only 8 signals (i.e., an 8-channel output signal OS) to respective 8 speakers, whereas the signal output section 60 may provide in a surround sound mode 12 signals (i.e., a 12-channel output signal OS) to respective 12 speakers including, for example, 4 surround speakers.

Again referring to Fig. 2, the room simulation module 52 is coupled to the audio signal conditioning module 51 in such a way that the left front signal, the left surround signal, the right front signal and the right surround signal are provided to the room simulation module 52. Based on these four signals, the room simulation module 52 generates four 3D signals, which are configured to be output to four speakers, e.g. disposed in the upper portion of the vehicle. For example, the 3D signals are generated in a case in which the 3D sound mode is set as the current preset sound mode in the sound mode setting section 50.

With setting a selected one of different preset sound modes retained in the signal processing apparatus, respective different sound effects may be achieved. For example, depending on the type of sound mode, audio content output with the audio signals S41 to S4n by the signal input section 40 may be weighted and/or processed differently by the sound mode setting section 50. For example, in a surround mode, audio content is reproduced with strong 3D signals.

Preset sound mode, as used herein, is also called in the art as sound mode, sound preset, or sound effect. In the following, "preset sound mode" is also called "sound preset", or simply "preset", particularly as referred to in Figures 3 to 5 with "Preset P1, P2, P3".

As further shown in Fig. 2, a sound volume setting section 70 is coupled with the sound mode setting section 50 and configured to control a volume of the multi-channel output signal OS. Particularly, the sound volume setting section 70 is coupled with the audio signal conditioning module 51. It receives a volume signal V which may be set by the user who may control the volume signal V as to the desired volume of the audio content.

When switching a preset sound mode from one preset sound mode to another preset sound mode, it is desirable for the user to get audible feedback that the triggering action (e.g., pressing a button) has an effect on the sound, i.e that sound mode switching is actually performed. Otherwise, the user might think that the system shows no reaction, i.e. is defect, since the user may have the impression that nothing happens when he presses a sound set button. This may lead to complaints to the manufacturer, who will have to resolve this, which in the end may increase overall manufacturing costs of the product.

According to the invention, when switching a preset sound mode from one preset sound mode to another preset sound mode, e.g. upon a corresponding user demand, the invention addresses this problem by only temporarily increasing or decreasing an output volume level of audio content to emphasize a preset sound mode change. After the sound mode change, the volume level is returning back to the original level before the change with slow release, for example within a few seconds. Thus, the audio experience in each preset sound mode is not negatively impaired by the short audible feedback.

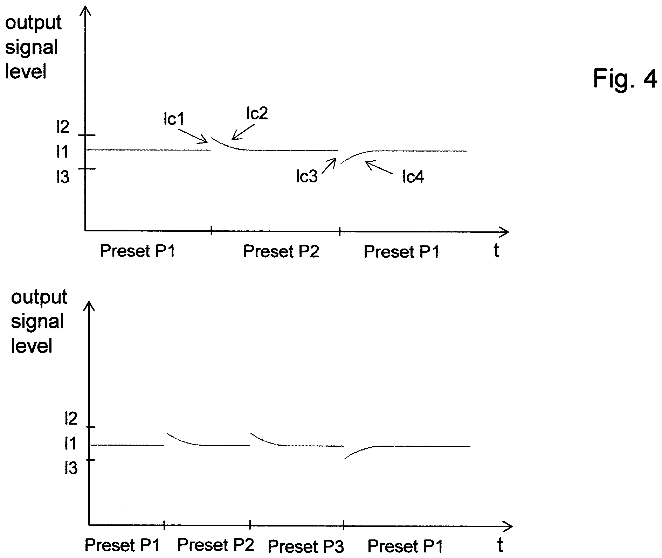

Fig. 4 shows a diagram of a volume level of an output signal provided to a loudspeaker upon one or more changes of the currently set preset sound mode over time t according to an embodiment of the invention.

Particularly, upon when the sound mode setting section 50 performs a change in setting from one preset sound mode (such as Preset P1) to another preset sound mode (such as Preset P2), for example upon a triggering action by the user, the sound volume setting section 70 controls the volume level of the one or more output signals OS1-Osn to perform a first volume level change Ic1 (here: a sharp jump) from a first level 11 to a second level 12, and a second volume level change Ic2 (here: a soft release) from the second level I2 back to the first level I1. Generally, the first volume level change Ic1 is steeper than the second volume level change Ic2.

For example, every sound mode switch in one direction (e.g., Preset P1 → Preset P2, Preset P1 → Preset P3, Preset P2 → Preset P3...) is emphasized by a sharp level increase by X dB (such as Ic1) with slow release back (such Ic2) to normal level. Further, for example, every sound mode switch back in the other direction (e.g., Preset P2 → Preset P1, Preset P3 → Preset P1, Preset P3 → Preset P2,...) is emphasized by a sharp level decrease by X dB (such as Ic3) with also a slow release back (such as Ic4) to normal level. The particular amount of "X" dB and the release slope may be defined during acoustics tuning and may depend on absolute sound preset levels, differences between sound presets and possible speed of sound preset changes. For example, X may be in a range of 1-3 dB and release time may be in a range of 3 - 5s, e.g. provided with exponential slope (which is a linear slope when measured in dB).

The first volume level change (such as Ic1) may be performed substantially simultaneously with the change in sound mode setting, or may be performed shortly after the change in sound mode setting. For example, it may be triggered by the user action (e.g. pressing of a button) which also triggers the change in sound mode setting, or it may be triggered by the sound mode setting section 50 when it initiates or performs the change in sound mode setting, or shortly afterwards. Advantageously, the second volume level change (such as Ic2) is performed after the change in sound mode setting.

The following examples and variants may be employed in connection with the invention:
For example, the second level I2 of the one or more output signals is set in a range of 1 to 3 dB higher or lower than the first level I1.

According to an embodiment, the first volume level change Ic1 is set in a range of 10 to 100 times steeper than the second volume level change Ic2.

For example, the first volume level change Ic1 may be set to have a duration in a range of lower than 200ms, particularly lower than 100ms. The second volume level change Ic2 may be set to have a duration in a range of 2 to 10s, particularly in a range of 3 to 5s.

The second volume level change Ic2 may be set to have at least in part an exponential slope, or a linear slope. Basically, other forms of slopes may also be employed.

The second level 12 of the at least one output signal and/or a slope of the second volume level change Ic2 may be set depending on a type of the preset sound mode set by the sound mode setting section 50 before the change in setting and/or depending on a type of the preset sound mode to be set by the sound mode setting section 50 after the change in setting.

Further, the second level I2 of the at least one output signal and/or a slope of the second volume level change Ic2 may be set depending on the first level I1 and/or depending on a speed of change in setting performed by the sound mode setting section 50.

Moreover, the second level I2 of the at least one output signal and/or a slope of the second volume level change Ic2 may be set depending on a difference between the preset sound modes of the plurality of preset sound modes. For example, if the preset sound modes are similar, thus any differences between them are less recognizable, then the second level I2 may be set to be higher to emphasize the change.

According to an embodiment, as set out in Fig. 4, upon when the sound mode setting section 50 performs a change in setting from the another one of the plurality of preset sound modes (here: P2) back to the one of the plurality of preset sound modes (here: P1) (i.e. a sound mode switch in the other direction from preset P2 back to preset P1), the sound volume setting section 70 controls the volume of the one or more output signals OS1-Osn to perform a third volume level change Ic3 from the first level I1 to a third level I3, and a fourth volume level change (Ic4) from the third level I3 back to the first level I1. Like with the first sound mode switch, the third volume level change Ic3 is steeper than the fourth volume level change Ic4. Preferably, to make the change in the other direction evident to the user, the third volume level change Ic3 is opposite to the first volume level change Ic1.

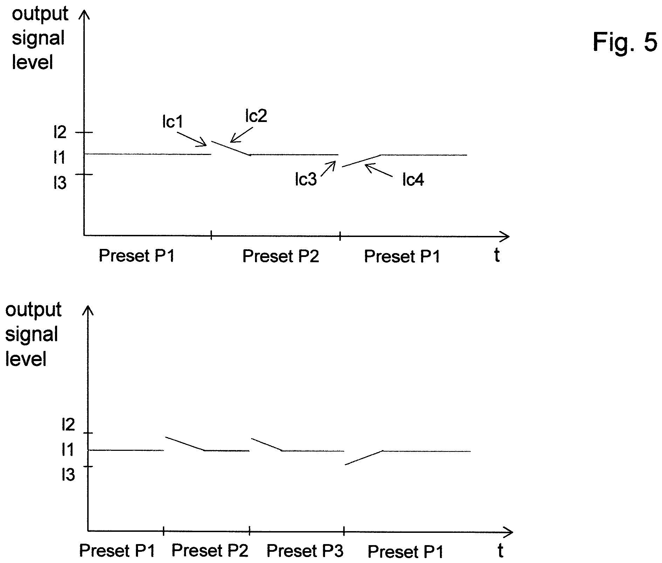

Preferably, after the first volume level change Ic1 and/or the third volume level change Ic3, the volume level of the one or more output signals comprises a peak before returning back to the first level I1, as shown in Figures 4 and 5. That means, the second volume level change Ic2 and/or fourth volume level change Ic4 may be initiated immediately after or shortly (e.g. in a range of milliseconds) after the first and third volume level changes Ic1, Ic3, respectively.

Further embodiments of sound mode switching and volume level changes are shown in the respective lower parts of Figures 4 and 5 similar to those in the upper parts.

Regarding the third and fourth volume level changes Ic3, Ic4, the embodiments, examples and variants as described with respect to I2, Ic1, Ic2 as set out above may be employed equally and analogously for I3, Ic3 and Ic4, and any further level changes as set out in the respective lower parts of Figures 4 and 5. Further, the respective levels and/or level changes may be employed differently and independently in height and/or slope regarding sound mode switching in one direction (e.g. from Preset P1 to Preset P2) and sound mode switching in the other (opposite) direction (e.g. from Preset P2 to Preset P1). For example, sound mode switching in one direction may employ higher volume level changes and exponential slope release, whereas sound mode switching in the other direction may employ lower volume level changes and linear slope release.

In the present embodiment, the first volume level change is an increase in volume level, and the third volume level change is a decrease in volume level, as shown in Fig. 4. However, according to another embodiment, the first and third volume level changes may be performed inversely.

Fig. 5 shows a diagram comparable to Fig. 4, but with different slopes of the second and fourth volume level changes Ic2, Ic4. In the embodiment of Fig. 5, these are set to have a linear slope.

The signal input section, the sound mode setting section, the sound volume setting section, and the signal output section may be implemented in any appropriate manner. They may be implemented in hardware, such as in a digital sound processor and/or in digital signal processing components. They may also be implemented in software in a digital sound processor or in any appropriate combination of hardware and software.

## Claims

1. A signal processing apparatus (6), comprising
- a signal input section (40) through which in operation at least one audio signal (S41-S4n) is provided,
- a sound mode setting section (50) for setting a preset sound mode (P1-P3) from a plurality of preset sound modes (P1-P3) retained in the signal processing apparatus (6),
- a signal output section (60) which is configured to output at least one output signal (OS1-OSn) to at least one loudspeaker (21-32) in accordance with the preset sound mode (PIP3) set by the sound mode setting section (50),
- a sound volume setting section (70) which is coupled with the sound mode setting section (50) and configured to control a volume of the at least one output signal (OS1-OSn),
- wherein the sound volume setting section (70) is configured to control the volume of the at least one output signal (OS1-Osn) to perform a first volume level change (Ic1) of the at least one output signal from a first level (I1) to a second level (I2) and a second volume level change (Ic2) of the at least one output signal from the second level (I2) back to the first level (I1), wherein the first volume level change (Ic1) is steeper than the second volume level change (Ic2), when the sound mode setting section (50) performs a change in setting from one of the plurality of preset sound modes (P1) to another one of the plurality of preset sound modes (P2).

2. The signal processing apparatus according to claim 1, wherein the second level (I2) of the at least one output signal is set in a range of 1 to 3 dB higher or lower than the first level (I1).

3. The signal processing apparatus according to claim 1 or 2, wherein the first volume level change (Ic1) is set in a range of 10 to 100 times steeper than the second volume level change (Ic2).

4. The signal processing apparatus according to one of claims 1 to 3, wherein the first volume level change (Ic1) is set to have a duration in a range of lower than 200ms, particularly lower than 100ms.

5. The signal processing apparatus according to one of claims 1 to 4, wherein the second volume level change (Ic2) is set to have a duration in a range of 2 to 10s, particularly in a range of 3 to 5s.

6. The signal processing apparatus according to one of claims 1 to 5, wherein the second volume level change (Ic2) is set to have at least in part an exponential slope.

7. The signal processing apparatus according to one of claims 1 to 6, wherein the second volume level change (Ic2) is set to have at least in part a linear slope.

8. The signal processing apparatus according to one of claims 1 to 7, wherein the plurality of preset sound modes (P1-P3) retained in the signal processing apparatus (6) comprises at least one of a stereo sound mode, a surround sound mode, a 3D sound mode, and a loudspeaker optimization distribution mode among a plurality of loudspeakers coupled with the signal output section (60).

9. The signal processing apparatus according to one of claims 1 to 8, wherein the signal output section (60) is configured to output a multi-channel output signal (OS) to respective loudspeakers (21-32), wherein a multi-channel output signal (OS) in one of the preset sound modes (P1) is different in channel configuration from a multi-channel output signal (OS) in another one of the preset sound modes (P2, P3).

10. The signal processing apparatus according to one of claims 1 to 9, wherein at least one of the second level (I2) of the at least one output signal and a slope of the second volume level change (Ic2) is set depending on a type of the preset sound mode (P1-P3) set by the sound mode setting section (50) before the change in setting and/or a type of the preset sound mode (P1-P3) to be set by the sound mode setting section (50) after the change in setting.

11. The signal processing apparatus according to one of claims 1 to 10, wherein at least one of the second level (12) of the at least one output signal and a slope of the second volume level change (Ic2) is set depending on the first level (11) and/or depending on a speed of change in setting by the sound mode setting section (50).

12. The signal processing apparatus according to one of claims 1 to 11, wherein at least one of the second level (12) of the at least one output signal and a slope of the second volume level change (lc2) is set depending on a difference between at least two of the preset sound modes (P1-P3).

13. The signal processing apparatus according to one of claims 1 to 12,
- wherein the sound volume setting section (70) is configured to control the volume of the at least one output signal (OS1-Osn) to perform a third volume level change (Ic3) of the at least one output signal from the first level (I1) to a third level (I3) and a fourth volume level change (Ic4) of the at least one output signal from the third level (13) back to the first level (11), wherein the third volume level change (Ic3) is steeper than the fourth volume level change (Ic4), when the sound mode setting section (50) performs a change in setting from the another one of the plurality of preset sound modes (P2) back to the one of the plurality of preset sound modes (P1),
- wherein the third volume level change (Ic3) is opposite to the first volume level change (Ic1).

14. Vehicle sound system (2) comprising a signal processing apparatus (6) according to any of the preceding claims.

15. A signal processing method for a sound system (2), the method comprising the steps of:
- setting a preset sound mode from a plurality of preset sound modes (P1-P3) retained in the sound system (2),
- outputting at least one output signal (OS1-Osn) to at least one loudspeaker (21-32) in accordance with the currently set preset sound mode (P1),
- controlling a volume of the at least one output signal (OS1-Osn) to perform a first volume level change (Ic1) of the at least one output signal from a first level (I1) to a second level (12) and a second volume level change (lc2) of the at least one output signal from the second level (12) back to the first level (I1), wherein the first volume level change (Ic1) is steeper than the second volume level change (Ic2), upon a change in setting from the currently set preset sound mode (P1) to another one of the plurality of preset sound modes (P2, P3).

## Patentansprüche

1. Signalverarbeitungsvorrichtung (6), aufweisend:
- einen Signaleingangsbereich (40), durch den im Betrieb mindestens ein Audiosignal (S41-S4n) bereitgestellt wird,
- einen Klangmodus-Einstellbereich (50) zum Einstellen eines vorgegebenen Klangmodus (P1-P3) aus einer Mehrzahl von vorgegebenen Klangmoden (P1-P3), die in der Signalverarbeitungseinrichtung (6) vorhanden sind,
- einen Signalausgangsbereich (60), der ausgebildet ist zur Abgabe von mindestens einem Ausgangssignal (OS1-OSn) an mindestens einen Lautsprecher (21-32) in Übereinstimmung mit dem vorgegebenen Klangmodus (P1-P3), der von dem Klangmodus-Einstellbereich (50) eingestellt ist,
- einen Lautstärken-Einstellbereich (70), der mit dem Klangmodus-Einstellbereich (50) gekoppelt ist und zum Steuern einer Lautstärke des mindestens einen Ausgangssignals (OS1-Osn) ausgebildet ist,
- wobei der Lautstärken-Einstellbereich (70) dazu ausgebildet ist, die Lautstärke des mindestens einen Ausgangssignals (OS1-Osn) zu steuern, um eine erste Änderung (Ic1) des Lautstärkenpegels des mindestens einen Ausgangssignals von einem ersten Pegel (I1) auf einen zweiten Pegel (I2) auszuführen und eine zweite Änderung (Ic2) des Lautstärkenpegels des mindestens einen Ausgangssignals von dem zweiten Pegel (12) zurück zu dem ersten Pegel (I1) auszuführen, wobei die erste Änderung (Ic1) des Lautstärkenpegels steiler ist als die zweite Änderung (Ic2) des Lautstärkenpegels, wenn der Klangmodus-Einstellbereich (50) einen Wechsel der Einstellung von einem der Mehrzahl von vorgegebenen Klangmoden (P1) zu einem anderen der Mehrzahl von vorgegebenen Klangmoden (P2) ausführt.

2. Signalverarbeitungsvorrichtung nach Anspruch 1,
wobei der zweite Pegel (I2) des mindestens einen Ausgangssignals in einem Spanne von 1 bis 3 dB höher oder niedriger als der erste Pegel (I1) vorgegeben ist.

3. Signalverarbeitungsvorrichtung nach Anspruch 1 oder 2,
wobei die erste Änderung (Lc1) des Lautstärkenpegels in einer Spanne von 10 bis 100 mal steiler als die zweite Änderung (Ic2) des Lautstärkenpegels vorgegeben ist.

4. Signalverarbeitungsvorrichtung nach einem der Ansprüche 1 bis 3, wobei die erste Änderung (Ic1) des Lautstärkenpegels derart vorgegeben ist, dass sie eine Dauer in einem Bereich von weniger als 200 ms, insbesondere weniger als 100 ms, aufweist.

5. Signalverarbeitungsvorrichtung nach einem der Ansprüche 1 bis 4, wobei die zweite Änderung (Ic2) des Lautstärkenpegels derart vorgegeben ist, dass sie eine Dauer in einem Bereich von 2 bis 10 s, insbesondere in einem Bereich von 3 bis 5 s, aufweist.

6. Signalverarbeitungsvorrichtung nach einem der Ansprüche 1 bis 5, wobei die zweite Änderung (Ic2) des Lautstärkenpegels derart vorgegeben ist, dass sie zumindest teilweise eine exponentielle Neigung aufweist.

7. Signalverarbeitungsvorrichtung nach einem der Ansprüche 1 bis 6, wobei die zweite Änderung (Ic2) des Lautstärkenpegels derart vorgegeben ist, dass sie zumindest teilweise eine lineare Neigung aufweist.

8. Signalverarbeitungsvorrichtung nach einem der Ansprüche 1 bis 7, wobei die mehreren vorgegebenen Klangmoden (P1-P3), die in der Signalverarbeitungsvorrichtung (6) vorhanden sind, mindestens einen von einem Stereoklangmodus, einem Surround-Klangmodus, einem 3D-Klangmodus und einem Lautsprecheroptimierungsverteilungsmodus unter einer Mehrzahl von mit dem Signalausgangsbereich (60) gekoppelten Lautsprechern aufweisen.

9. Signalverarbeitungsvorrichtung nach einem der Ansprüche 1 bis 8, wobei der Signalausgangsbereich (60) dazu ausgebildet ist, ein Mehrkanal- Ausgangssignal (OS) an jeweilige Lautsprecher (21-32) abzugeben, wobei ein Mehrkanal-Ausgangssignal (OS) in einem der vorgegebenen Klangmoden (P1) sich in einer Kanalkonfiguration von einem Mehrkanal-Ausgangssignal (OS) in einem anderen der vorgegebenen Klangmoden (P2, P3) unterscheidet.

10. Signalverarbeitungsvorrichtung nach einem der Ansprüche 1 bis 9, wobei mindestens eines von dem zweiten Pegel (12) des mindestens einen Ausgangssignals und einer Neigung der zweiten Änderung (Ic2) des Lautstärkenpegels in Abhängigkeit von einer Art des von dem Klangmodus-Einstellbereich (50) vor der Änderung der Einstellung eingestellten, vorgegebenen Klangmodus (P1-P3) und/oder einer Art des von dem Klangmodus-Einstellbereich (50) nach der Änderung der Einstellung einzustellenden, vorgegebenen Klangmodus (P1-P3) vorgegeben ist.

11. Signalverarbeitungsvorrichtung nach einem der Ansprüche 1 bis 10, wobei mindestens eines von dem zweiten Pegel (I2) des mindestens einen Ausgangssignals und einer Neigung der zweiten Änderung (Ic2) des Lautstärkenpegels in Abhängigkeit von dem ersten Pegel (11) und/oder in Abhängigkeit von einer Änderungsgeschwindigkeit der Einstellung durch den Klangmodus-Einstellbereich (50) vorgegeben ist.

12. Signalverarbeitungsvorrichtung nach einem der Ansprüche 1 bis 11, wobei mindestens eines von dem zweiten Pegel (12) des mindestens einen Ausgangssignals und einer Neigung der zweiten Änderung (Ic2) des Lautstärkenpegels in Abhängigkeit von einer Differenz zwischen mindestens zwei der vorgegebenen Klangmoden (P1-P3) vorgegeben ist.

13. Signalverarbeitungsvorrichtung nach einem der Ansprüche 1 bis 12,
- wobei der Lautstärken-Einstellbereich (70) dazu ausgebildet ist, die Lautstärke des mindestens einen Ausgangssignals (OS1-Osn) zu steuern, um eine dritte Änderung (Ic3) des Lautstärkenpegels des mindestens einen Ausgangssignals von dem ersten Pegel (11) auf einen dritten Pegel (I3) und eine vierte Änderung (Ic4) des Lautstärkenpegels des mindestens einen Ausgangssignals von dem dritten Pegel (13) zurück zu dem ersten Pegel (I1) auszuführen, wobei die dritte Änderung (Ic3) des Lautstärkenpegels steiler ist als die vierte Änderung (Ic4) des Lautstärkenpegels, wenn der Klangmodus-Einstellbereich (50) eine Änderung der Einstellung von dem weiteren der mehreren vorgegebenen Klangmoden (P2) zurück zu dem einen von den mehreren vorgegebenen Klangmoden (P1) ausführt,
- wobei die dritte Änderung (Ic3) des Lautstärkenpegels entgegengesetzt zu der ersten Änderung (Ic1) des Lautstärkenpegels ist.

14. Fahrzeug-Tonsystem (2) mit einer Signalverarbeitungsvorrichtung (6) nach einem der vorhergehenden Ansprüche.

15. Signalverarbeitungsverfahren für ein Tonsystem (2),
wobei das Verfahren folgende Schritte aufweist:
- Einstellen eines vorgegebenen Klangmodus aus einer Mehrzahl von vorgegebenen Klangmoden (P1-P3), die in dem Tonsystem (2) vorhanden sind,
- Abgeben von mindestens einem Ausgangssignal (OS1-Osn) an mindestens einen Lautsprecher (21-32) in Übereinstimmung mit dem aktuell eingestellten vorgegebenen Klangmodus (P1),
- Steuern einer Lautstärke des mindestens einen Ausgangssignals (OSI-Osn) zum Ausführen einer ersten Änderung (Ic1) des Lautstärkenpegels des mindestens einen Ausgangssignals von einem ersten Pegel (I1) auf einen zweiten Pegel (12) und einer zweiten Änderung (Ic2) des Lautstärkenpegels des mindestens einen Ausgangssignals von dem zweiten Pegel (12) zurück zu dem ersten Pegel (I1), wobei die erste Änderung (Ic1) des Lautstärkenpegels bei einer Änderung der Einstellung von dem aktuell eingestellten vorgegebenen Klangmodus (P1) auf einen anderen der mehreren vorgegebenen Klangmoden (P2, P3) steiler ist als die zweite Änderung (Ic2) des Lautstärkenpegels.

## Revendications

1. Appareil de traitement de signal (6), comprenant :
- une section d'entrée de signal (40) par l'intermédiaire de laquelle, en fonctionnement, au moins un signal audio (S41-S4n) est fourni,
- une section de réglage de mode audio (50) pour régler un mode audio préréglé (P1-P3) parmi une pluralité de modes audio préréglés (P1-P3) mémorisés dans l'appareil de traitement de signal (6),
- une section de sortie de signal (60) qui est configurée pour délivrer au moins un signal de sortie (OS1-OSn) à au moins un haut-parleur (21-32) conformément au mode audio préréglé (P1-P3) réglé par la section de réglage de mode audio (50),
- une section de réglage de volume sonore (70) qui est couplée à la section de réglage de mode audio (50) et configurée pour commander le volume de l'au moins un signal de sortie (OS1-OSn),
dans lequel la section de réglage de volume sonore (70) est configurée pour commander le volume de l'au moins un signal de sortie (OS1-OSn) afin d'effectuer un premier changement de niveau de volume (Ic1) de l'au moins un signal de sortie passant d'un premier niveau (11) à un deuxième niveau (12) et un deuxième changement de niveau de volume (Ic2) de l'au moins un signal de sortie revenant du deuxième niveau (12) au premier niveau (11), le premier changement de niveau de volume (Ic1) étant plus rapide que le deuxième changement de niveau de volume (Ic2), lorsque la section de réglage de mode audio (50) effectue un changement de réglage passant d'un mode (P1) de la pluralité de modes audio préréglés à un autre mode (P2) de la pluralité de modes audio préréglés.

2. Appareil de traitement de signal selon la revendication 1, dans lequel le deuxième niveau (12) de l'au moins un signal de sortie est réglé dans une plage de 1 à 3 dB au-dessus ou au-dessous du premier niveau (11).

3. Appareil de traitement de signal selon la revendication 1 ou 2, dans lequel le premier changement de niveau de volume (Ic1) est réglé dans une plage de 10 à 100 fois plus rapide que le deuxième changement de niveau de volume (Ic2).

4. Appareil de traitement de signal selon l'une des revendications 1 à 3, dans lequel le premier changement de niveau de volume (Ic1) est réglé pour avoir une durée comprise dans une plage inférieure à 200 ms, en particulier inférieure à 100 ms.

5. Appareil de traitement de signal selon l'une des revendications 1 à 4, dans lequel le deuxième changement de niveau de volume (lc2) est réglé pour avoir une durée comprise dans une plage de 2 à 10 s, en particulier dans une plage de 3 à 5 s.

6. Appareil de traitement de signal selon l'une des revendications 1 à 5, dans lequel le deuxième changement de niveau de volume (lc2) est réglé pour avoir au moins en partie une pente exponentielle.

7. Appareil de traitement de signal selon l'une des revendications 1 à 6, dans lequel le deuxième changement de niveau de volume (lc2) est réglé pour avoir au moins en partie une pente linéaire.

8. Appareil de traitement de signal selon l'une des revendications 1 à 7, dans lequel la pluralité de modes audio préréglés (P1-P3) mémorisés dans l'appareil de traitement de signal (6) comprennent au moins un mode parmi un mode audio stéréophonique, un mode audio ambiophonique, un mode audio 3D et un mode de distribution à optimisation de haut-parleurs parmi une pluralité de haut-parleurs couplés à la section de sortie de signal (60).

9. Appareil de traitement de signal selon l'une des revendications 1 à 8, dans lequel la section de sortie de signal (60) est configurée pour délivrer un signal de sortie multicanal (OS) à des haut-parleurs respectifs (21-32), un signal de sortie multicanal (OS) dans l'un (P1) des modes audio préréglés étant différent, en termes de configuration de canaux, d'un signal de sortie multicanal (OS) dans un autre (P2, P3) des modes audio préréglés.

10. Appareil de traitement de signal selon l'une des revendications 1 à 9, dans lequel au moins un paramètre parmi le deuxième niveau (12) de l'au moins un signal de sortie et une pente du deuxième changement de niveau de volume (lc2) est réglé en fonction d'un type du mode audio préréglé (P1-P3) réglé par la section de réglage de mode audio (50) avant le changement de réglage et/ou d'un type du mode audio préréglé (P1-P3) qui sera réglé par la section de réglage de mode audio (50) après le changement de réglage.

11. Appareil de traitement de signal selon l'une des revendications 1 à 10, dans lequel au moins un paramètre parmi le deuxième niveau (12) de l'au moins un signal de sortie et une pente du deuxième changement de niveau de volume (lc2) est réglé en fonction du premier niveau (11) et/ou en fonction d'une vitesse de changement de réglage par la section de réglage de mode audio (50).

12. Appareil de traitement de signal selon l'une des revendications 1 à 11, dans lequel au moins un paramètre parmi le deuxième niveau (12) de l'au moins un signal de sortie et une pente du deuxième changement de niveau de volume (lc2) est réglé en fonction d'une différence entre au moins deux des modes audio préréglés (P1-P3).

13. Appareil de traitement de signal selon l'une des revendications 1 à 12,
- dans lequel la section de réglage de volume sonore (70) est configurée pour commander le volume de l'au moins un signal de sortie (OS1-OSn) afin d'effectuer un troisième changement de niveau de volume (lc3) de l'au moins un signal de sortie passant du premier niveau (11) à un troisième niveau (13) et un quatrième changement de niveau de volume (lc4) de l'au moins un signal de sortie revenant du troisième niveau (13) au premier niveau (11), le troisième changement de niveau de volume (lc3) étant plus rapide que le quatrième changement de niveau de volume (lc4), lorsque la section de réglage de mode audio (50) effectue un changement de réglage revenant de l'autre mode (P2) de la pluralité de modes audio préréglés audit mode (P1) de la pluralité de modes audio préréglés,
- dans lequel le troisième changement de niveau de volume (lc3) est opposé au premier changement de niveau de volume (Ic1).

14. Système audio de véhicule (2), comprenant un appareil de traitement de signal (6) selon l'une quelconque des revendications précédentes.

15. Procédé de traitement de signal pour un système audio (2), le procédé comprenant les étapes consistant à :
- régler un mode audio préréglé parmi une pluralité de modes audio préréglés (P1-P3) mémorisés dans le système audio (2),
- délivrer au moins un signal de sortie (OS1-OSn) à au moins un haut-parleur (21-32) conformément au mode audio préréglé actuellement réglé (P1),
- commander le volume de l'au moins un signal de sortie (OS1-OSn) afin d'effectuer un premier changement de niveau de volume (Ic1) de l'au moins un signal de sortie passant d'un premier niveau (11) à un deuxième niveau (I2) et un deuxième changement de niveau de volume (lc2) de l'au moins un signal de sortie revenant du deuxième niveau (12) au premier niveau (11), le premier changement de niveau de volume (Ic1) étant plus rapide que le deuxième changement de niveau de volume (Ic2), lors d'un changement de réglage passant du mode audio préréglé actuellement réglé (P1) à un autre mode (P2, P3) de la pluralité de modes audio préréglés.
